# EUROPEAN PATENT SPECIFICATION

(11) **EP 2 993 770 B1**
(45) Date of publication and mention of the grant of the patent: **21.02.2018**
(21) Application number: 14820377.1
(22) Date of filing: 14.04.2014
(51) Int. Cl.: H02K 24/00, G01D 5/20, H02K 3/52, H02K 5/22

(54) **RESOLVER CABLE CONNECTION STRUCTURE AND RESOLVER**
KABELVERBINDUNGSSTRUKTUR EINES RESOLVERS UND RESOLVER
STRUCTURE DE CONNEXION DE CÂBLE DE RÉSOLVEUR ET RÉSOLVEUR

(30) Priority: 04.07.2013 JP 2013140724
(43) Date of publication of application: 09.03.2016
(73) Proprietor: Japan Aviation Electronics Industry, Ltd., Tokyo 150-0043 (JP)
(72) Inventor: YAMAMOTO, Hirotsugu, Tokyo 150-0043 (JP)
(74) Representative: MERH-IP Matias Erny Reichl Hoffmann Patentanwälte PartG mbB
(86) International application number: PCT/JP2014/060576
(87) International publication number: WO 2015/001829

(56) References cited:
- JP-A- H04 162 377
- JP-A- 2003 307 437
- JP-A- 2004 120 873
- JP-A- 2008 172 960
- JP-A- 2009 232 646
- JP-A- 2010 011 601
- US-A1- 2003 071 527

## Description

### [TECHNICAL FIELD]

The present invention relates to a resolver that detects an angle of rotation, and more particularly to a cable connection structure in a terminal part of the resolver.

### [BACKGROUND ART]

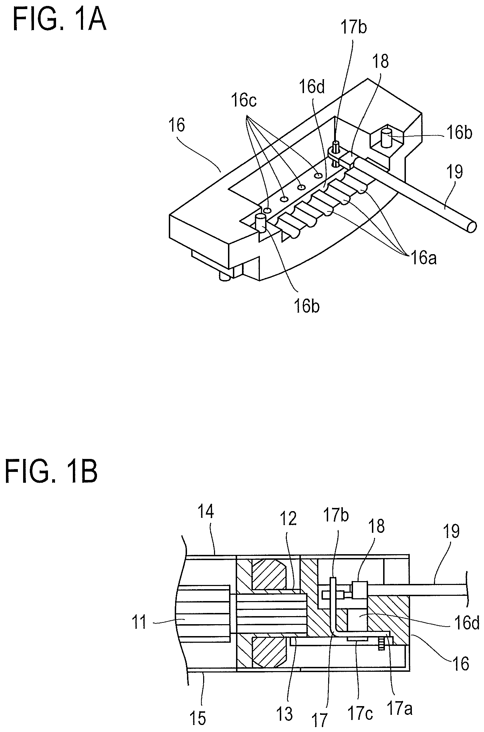

Figs. 1A and 1B illustrate a resolver input/output terminal structure described in Patent Literature 1. Fig. 1A illustrates a lead terminal block to be attached to an outer perimeter of a stator core. Fig. 1B illustrates a structure of a stator assembly in a place to which the lead terminal block illustrated in Fig. 1A is attached.

The stator assembly is configured with a stator core 11, insulating members 12 and 13 disposed on both sides of the stator core 11, covers 14 and 15 provided on the outside of the insulating members 12 and 13, and a lead terminal block 16.

A recess is formed on the upper surface of the lead terminal block 16. A plurality of lead fixing grooves 16a, fixing protrusions 16b, a plurality of through holes 16c, and a through groove 16d are formed in the recess. The fixing protrusions 16b are used to fix the lead terminal block 16 and the cover 14.

The lead terminal block 16 has flat terminals 17 provided. Each flat terminal 17 has a terminal part 17a and a flat terminal pin part 17b that is bent substantially 90° with respect to the terminal part 17a. The flat terminal pin parts 17b pass through the through holes 16c in the lead terminal block 16 from the lower surface and are erected on the upper surface of the lead terminal block 16.

The terminal parts 17a of the flat terminals 17 are provided across the through groove 16d. In the terminal parts 17a, weld parts 17c are formed with gaps through which stator windings pass. Stator winding ends (not shown) are passed through the gaps between the weld parts 17c and resistance-welded to the weld parts 17c.

A lead 19 having a connection terminal 18 crimped to the tip is mounted on each lead fixing groove 16a. The connection terminals 18 are engaged with the flat terminal pin parts 17b, and connected with the flat terminal pin parts 17b by arc welding. Thus, the leads 19 are connected, via the flat terminal pin parts 17b, with the stator windings welded to the flat terminals 17 at the weld parts 17c.

### [PRIOR ART LITERATURE]

### [PATENT LITERATURE]

Patent literature 1: Japanese Patent Application Laid Open No. 2004-120873

### [SUMMARY OF THE INVENTION]

### [PROBLEMS TO BE SOLVED BY THE INVENTION]

For important metal members that constitute an electrical pathway, for example, exposed metal portions are typically sealed by resin, in order to protect the metal members from an external environment and prevent corrosion and the like. Sealing methods include potting.

A resolver terminal part has an exposed metal portion, and such resin sealing is required to enhance the reliability. However, a conventional terminal structure as illustrated in Figs. 1A and 1B has a problem in that resin sealing cannot be performed excellently.

That is, when the connection terminal 18 is crimped to the tip of the lead 19, a coating tip is pressed against the connection terminal 18 so that a conductor exposed by removing a coating is enclosed with the connection terminal 18 as much as possible, and then the connection terminal 18 is crimped. Such a crimp structure is actually illustrated in Figs. 1A and 1B.

However, in this crimp structure, sealing resin does not easily get into a portion of contact between the coating tip of the lead 19 and the connection terminal 18, leading to a state in which there is no sealing resin.

Resin sealing is performed for an area including a coating portion of the lead 19, but the adhesion between sealing resin and the coating is usually not excellent. For example, if the lead 19 is shook and swings up and down, there may be a situation in which a crack progresses from an interface between the coating and the sealing resin to reach the coating tip. When highly heat-resistant fluorine resin such as, for example, polytetrafluoroethylene (PTFE) is used for the coating of the lead 19, this situation is especially noticeable because the fluorine resin does not adhere to the sealing resin.

As described above, in the structure illustrated in Figs. 1A and 1B, it cannot be expected that there will be sealing resin between the coating tip of the lead 19 and the connection terminal 18. Therefore, if such a crack occurs, an external contaminant is more likely to enter the portion where the connection terminal 18 is positioned. Accordingly, in the terminal structure as illustrated in Figs. 1A and 1B, even when resin sealing is performed, resin sealing cannot be provided excellently and high reliability cannot be obtained.

An object of the present invention is to provide a resolver cable connection structure in which resin sealing can be performed excellently and reliably, and highly reliable resin sealing can be achieved.

### [MEANS TO SOLVE THE PROBLEMS]

According to the present invention, in a resolver cable connection structure in which a plurality of cables used for transferring signals are connected with resolver terminals, the plurality of cables are connected with the resolver terminals via a relay member. The relay member includes a holding plate and a plurality of relay terminals that pass through the holding plate, are protruded from both plate surfaces of the holding plate, and are arranged and held in the holding plate. A conductor of each cable is connected to one end side of each relay terminal. A recess is formed in a resolver terminal part in which the resolver terminals are arranged, a plurality of notches are provided on a side wall of the recess, and bottom surface corners of the recess are configured with curved surfaces. The holding plate is inserted in the recess, and one end side of each relay terminal and the conductors are positioned in the recess so as to be separated from the bottom surface of the recess. The tip of a coating following the conductor of each cable passes through each of the notches and is positioned in the recess, and each relay terminal and the coating are separated. The other end side of each relay terminal is connected with each resolver terminal. Resin is injected into the recess, and one end side of each relay terminal and the conductors are sealed.

### [EFFECTS OF THE INVENTION]

In a resolver cable connection structure according to the present invention, resin sealing can be performed excellently. In addition, for example, if a cable is shook and swings up and down, and a crack occurs from an interface between a coating of the cable and sealing resin, the progress of the crack can be inhibited to reliably protect a conductor of the cable and a terminal connected with the conductor. Highly reliable resin sealing can thereby be achieved.

### [BRIEF DESCRIPTION OF THE DRAWINGS]

Fig. 1A is a perspective view illustrating a conventional lead terminal block.
Fig. 1B is a cross-sectional view illustrating a structure of a stator assembly in a place to which the lead terminal block in Fig. 1A is attached.
Fig. 2A is a plan view illustrating a stator having a structure of a terminal part in an embodiment of a resolver cable connection structure according to the present invention.
Fig. 2B is a front view of the stator illustrated in Fig. 2A.
Fig. 3A is a partial enlarged view of the C portion in Fig. 2A.
Fig. 3B is a partial enlarged view of the D portion in Fig. 2B.
Fig. 3C is a partial enlarged cross-sectional view of Fig. 3B.
Fig. 4A is a perspective view of the terminal part in Fig. 2A.
Fig. 4B is a perspective view of the terminal part in Fig. 2A as viewed from a direction different from that in Fig. 4A.
Fig. 5A is a plan view illustrating a relay member in the embodiment of the resolver cable connection structure according to the present invention.
Fig. 5B is a front view of the relay member illustrated in Fig. 5A.
Fig. 5C is a bottom view of the relay member illustrated in Fig. 5A.
Fig. 5D is a side view of the relay member illustrated in Fig. 5A.
Fig. 5E is a perspective view of the relay member illustrated in Fig. 5A as viewed from above.
Fig. 5F is a perspective view of the relay member illustrated in Fig. 5A as viewed from underneath.
Fig. 6 is a perspective view illustrating a state in which cables are connected to the relay member illustrated in Fig. 5E.
Fig. 7A is a plan view illustrating a state in which the relay member to which the cables are connected is attached to the stator illustrated in Fig. 2A.
Fig. 7B is a bottom view illustrating a state in which the relay member to which the cables are connected is attached to the stator illustrated in Fig. 2A.
Fig. 8 is a perspective view illustrating a state in which the relay member to which the cables are connected is attached to the stator illustrated in Fig. 2A.
Fig. 9A is a partial enlarged view of the C portion in Fig. 7A.
Fig. 9B is an enlarged view of the C portion in Fig. 7A as viewed from the front side.
Fig. 9C is an enlarged perspective view of the terminal part in Fig. 7A.
Fig. 10 is a partial enlarged cross-sectional perspective view of the terminal part in Fig. 7A.
Fig. 11 illustrates resistance welding and resin sealing.
Fig. 12 is a plan view of a resolver including the stator illustrated in Fig. 7A and a rotor.

### [DETAILED DESCRIPTION OF THE EMBODIMENTS]

An embodiment of the present invention will now be described.

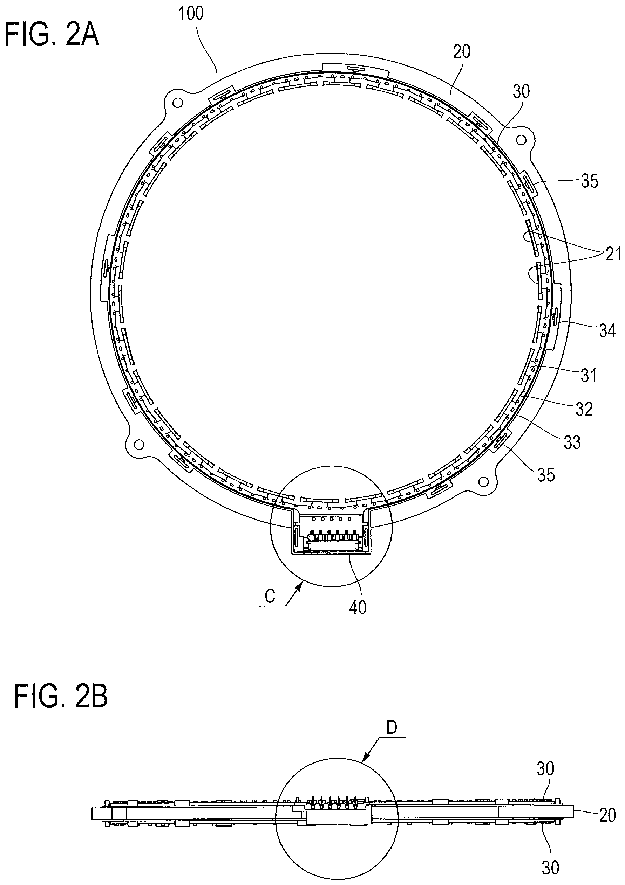

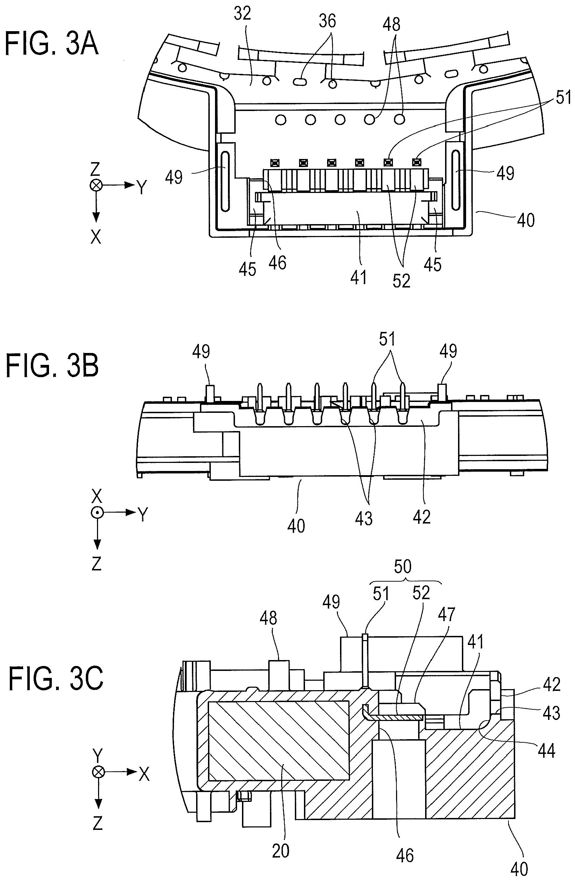

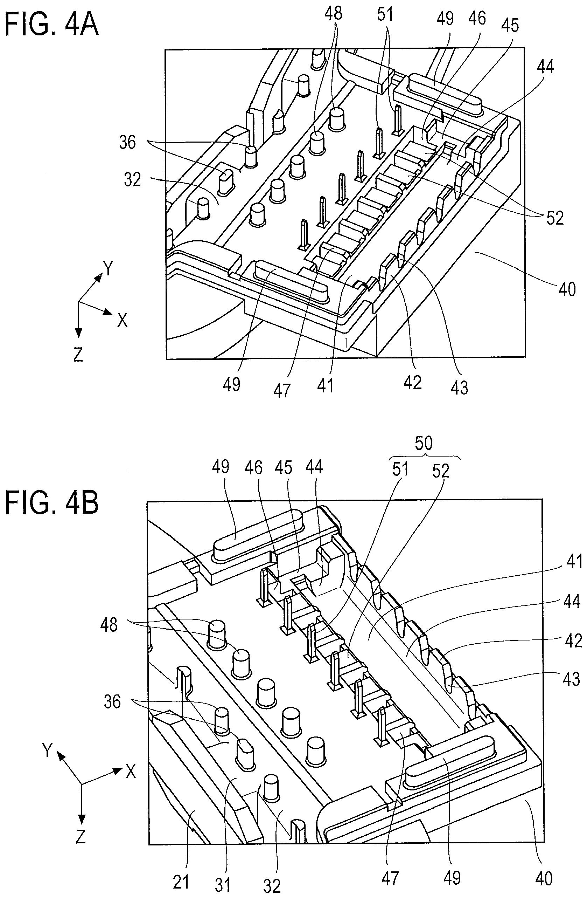

Figs. 2A and 2B illustrate a stator of a resolver having a structure of a terminal part in an embodiment of a cable connection structure according to the present invention. Figs. 3A to 3C, 4A, and 4B illustrate details of the terminal part.

A stator 100 is configured with a core 20, an insulator 30, windings, and covers. The windings and covers are not shown in Figs. 2A and 2B.

The core 20 is made of a magnetic material and is annular. A plurality of teeth 21 are protrusively formed on an inner perimeter of the core 20 such that the teeth 21 are arranged at equal angular intervals in a circumferential direction.

The insulator 30 is integrated with the core 20 by insert molding. The insulator 30 is annular, partially covering the core 20. The insulator 30 is formed on the inner perimeter side of the core 20 so as to cover both front and back sides of the core 20. The insulator 30 includes winding parts 31, a jumper wire part 32, a protective barrier 33, insular parts 34 and 35, and a terminal part 40.

Each winding part 31 is provided so as to surround the teeth 21. Windings (excitation winding and detection winding) are wound around the winding parts 31. The jumper wire part 32 is positioned on the outer perimeter side of the winding parts 31. Jumper wires, which are extensions of the windings, are placed in the jumper wire part 32. The protective barrier 33 is provided on an outer perimeter of the jumper wire part 32. The insular parts 34 and 35 are protrusively formed on an outer perimeter of the protective barrier 33. The insular parts 34 and 35 are used to attach the covers. The terminal part 40 is formed so as to protrude from an outer perimeter of the core 20, and so as to be disposed across both front and back sides of the core 20, with the core 20 interposed in the terminal part 40. A detailed structure of the terminal part 40 will now be described with reference to Figs. 3A to 3C, 4A, and 4B.

A recess 41 is formed on the upper surface on the protruding end (tip) side of the terminal part 40. The recess 41 is formed to extend in a width direction orthogonal to a protruding direction of the terminal part 40. In the following description, the protruding direction of the terminal part 40 is an X direction, the width direction is a Y direction, and a thickness direction (vertical direction) is a Z direction.

Notches 43 are formed on a side wall 42 of the recess 41 positioned on the protruding end side of the terminal part 40. In this example, six notches 43 are formed such that the notches 43 are arranged at equal intervals in the Y direction. Each notch 43 is an oblong notch and has a guiding slope at the open end. The recess 41 is rectangular and has bottom surface corners configured with curved surfaces 44. In this example, among four sides of the bottom surface, the curved surfaces 44 are formed in three sides: a long side near the side wall 42 and a pair of opposed short sides. Each curved surface 44 is a cylindrical surface with a central angle of 90°, and is a so-called R surface.

Positioning recesses 45 are formed next to the recess 41, at both ends of the recess 41 in the Y direction. An opening 46 is formed in the inside of the recess 41 in the X direction so as to be slightly separated from the recess 41, and so as to open in the vertical direction (Z direction).

The terminal part 40 has resolver terminals 50 insert-molded and integrally provided. Each resolver terminal 50 is formed to be bent into an L shape. One side of the L shape is a square bar-shaped pin part 51, and the other side is a plate-shaped terminal plate part 52. The resolver terminals 50 are placed so that the pin parts 51 are protruded from the upper surface of the terminal part 40 in the inside of the opening 46 in the X direction and the terminal plate parts 52 are placed across the opening 46 in the X direction. Six resolver terminals 50 are provided to match the positions and arrangement of the six notches 43 on the side wall 42. In the opening 46, a dividing wall 47 is provided between each terminal plate part 52.

In this example, the resolver is a one-phase excitation, two-phase output type. Although not shown, six jumper wires, which are extensions of the windings, are drawn from the jumper wire part 32 and connected to the pin parts 51 of the six resolver terminals 50. The connection is made by welding. Auxiliary bosses 48, which are protrusively formed in a portion from the jumper wire part 32 to the arrangement of the pin parts 51, are used to hook and position the jumper wires. Also in the jumper wire part 32, jumper bosses 36, which function similarly to the auxiliary bosses 48, are protrusively formed. Bosses 49, which are protrusively formed on the upper surface of the terminal part 40 at both ends in the Y direction, are used to attach the cover.

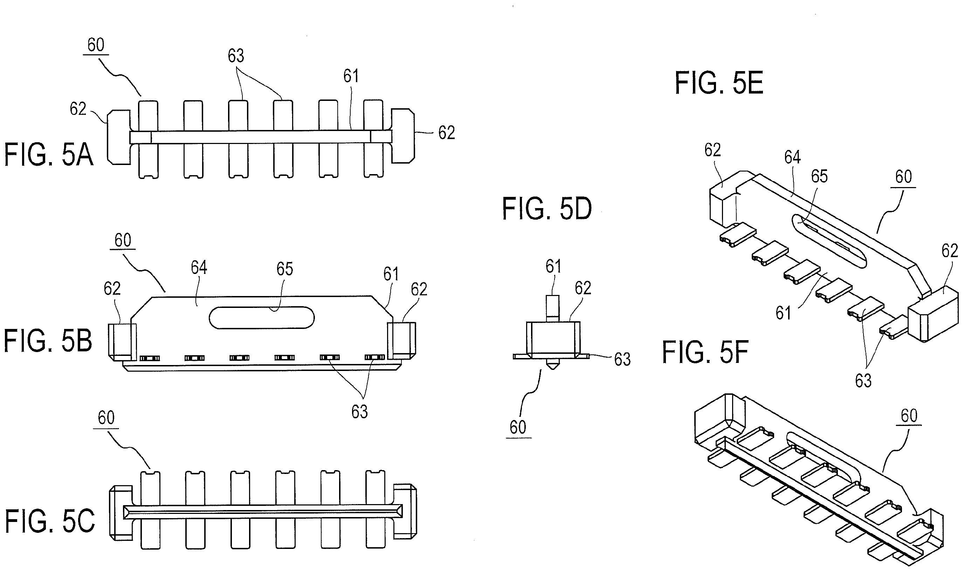

Figs. 5A to 5F illustrate a relay member for use in the embodiment of the cable connection structure according to the present invention. A relay member 60 includes a holding plate 61, positioning protrusions 62, and relay terminals 63.

The relay terminals 63 are strip-shaped, pass through the holding plate 61, are protruded from both plate surfaces of the holding plate 61, and are held in the holding plate 61. In this example, six relay terminals 63 are provided, and arranged and hold on the lower end side of the holding plate 61. An arrangement pitch of the relay terminals 63 is equal to the arrangement pitch of the resolver terminals 50 described above.

Positioning protrusions 62 are protrusively formed at both ends of the holding plate 61 in an arrangement direction of the relay terminals 63. The positioning protrusions 62 are provided to match the positioning recesses 45 formed in the terminal part 40 of the stator 100.

The upper end side of the holding plate 61 serves as a handling part 64, which can be held during handling by an automatic machine or a human hand. In this example, the handling part 64 has a shape with an elongate hole (oblong hole) 65. The lower end of the holding plate 61 is below the place where the relay terminals 63 are arranged, and is chamfered along the entire circumference to have a taper shape in this example. The shape of the handling part 64 is not limited to the above, and is selected as appropriate.

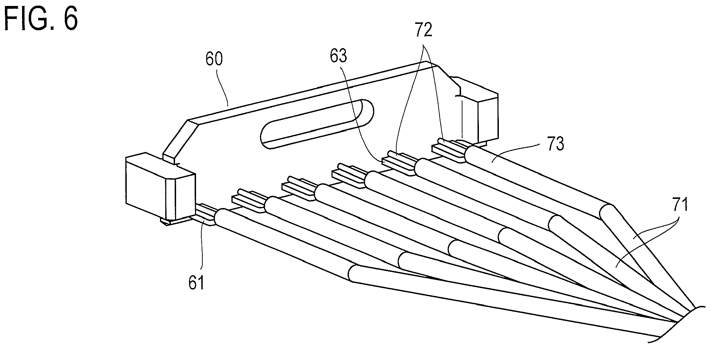

Fig. 6 illustrates a state in which cables 71 of a cable harness are connected to the relay member 60 described above. Each of the six cables 71 is connected to one end side of each of the six relay terminals 63. In Fig. 6, reference numeral 72 denotes a conductor exposed by removing a coating 73, and the conductor 72 is connected with the relay terminal 63 by resistance spot welding. The cables 71 are used for transferring signals (excitation signal and detection signal) for the resolver. Each cable 71 is connected so that the tip of the relay terminal 63 and the tip of the coating 73 are separated by a predetermined amount to avoid contact.

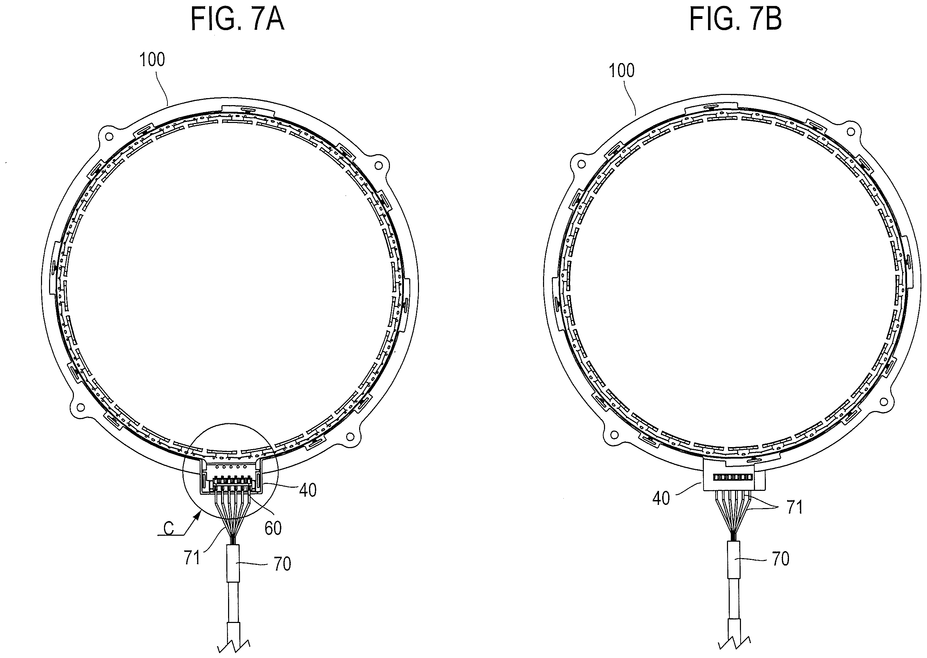

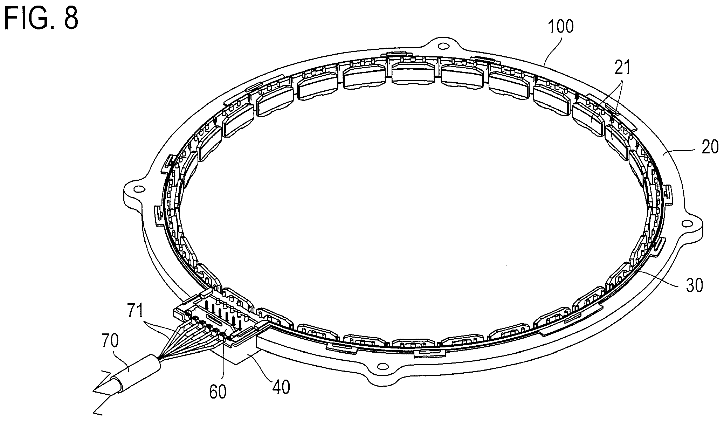

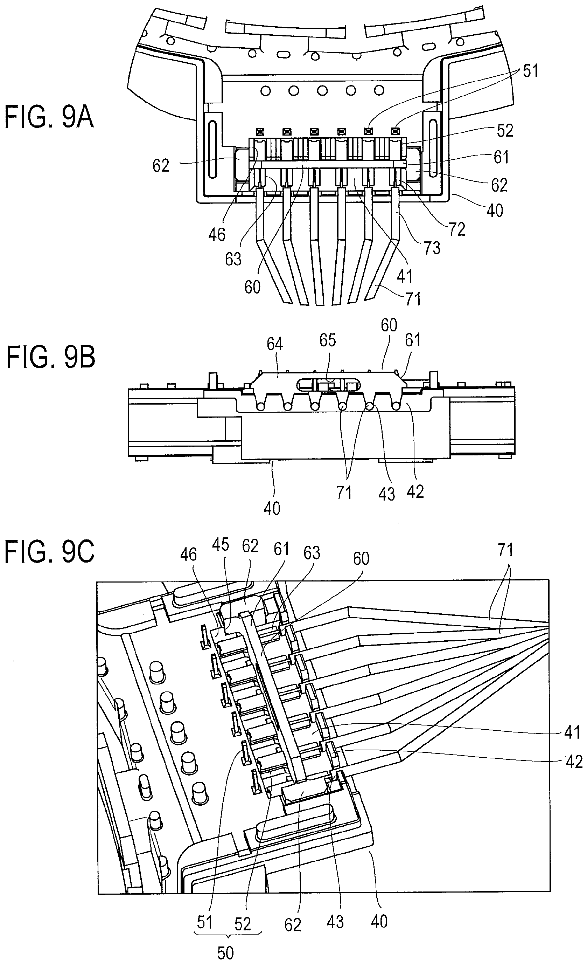

Figs. 7A, 7B, and 8 illustrate a state in which the relay member 60 to which the cables 71 are attached is attached to the terminal part 40 of the stator 100. Figs. 9A to 9C, 10, and 11 illustrate details of the terminal part 40. In Figs. 7A, 7B, and 8, reference numeral 70 denotes a cable harness.

The relay member 60 is attached to the terminal part 40 by inserting the holding plate 61 in the recess 41. At this time, the pair of positioning protrusions 62 of the relay member 60 are fit in the pair of positioning recesses 45 of the terminal part 40, and the relay member 60 is thereby positioned. The tip of the coating 73 following the conductor 72 of each of the six cables 71 passes through each notch 43 formed on the side wall 42 of the recess 41 and is positioned in the recess 41. The exposed conductors 72 and one end side of each relay terminal 63 that is connected with the conductor 72 are positioned in the recess 41 so as to be separated from the bottom surface of the recess 41.

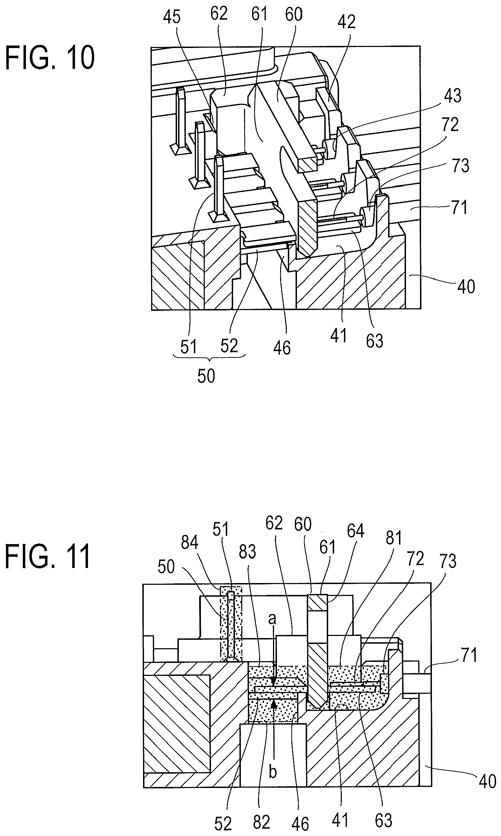

The other end side of each relay terminal 63 is positioned on the terminal plate part 52 of each of the resolver terminals 50 arranged in the opening 46. The other end side of each relay terminal 63 and the terminal plate part 52 are connected by resistance spot welding. Thus, the six cables 71 are connected, via the relay member 60, with the six resolver terminals 50. The terminal plate part 52 of each resolver terminal 50 and the other end side of each relay terminal 63 that is positioned on the terminal plate part 52 are positioned in and on the opening 46 that opens in the vertical direction. Therefore, a resistance welding tool (electrodes) can be easily positioned at a weld part from above and from underneath, as denoted by the arrows a and b in Fig. 11.

Resin is injected into the recess 41, in which one end side of each relay terminal 63 connected with the cable 71 is positioned, and one end side of each relay terminal 63 and the conductor 72 of each of the cables 71 are sealed by potting. Similarly, resin is injected into the opening 46 and divided spaces on the opening 46, that is, spaces enclosed with the holding plate 61 and the positioning protrusions 62 of the relay member 60 and an inner wall surface of the terminal part 40 as an extension of the opening 46, and the other end side of each relay terminal 63 and the terminal plate part 52 of each resolver terminal 50 are sealed. In addition, the pin parts 51 of the resolver terminals 50 to which the jumper wires are connected are also resin-sealed. In Fig. 11, reference numerals 81 to 84 denote sealing resin. The handling part 64 on the upper end side of the holding plate 61 of the relay member 60 is positioned in the outside of the recess 41.

In this example, the sealing resin 81 to 84 is epoxy-based resin. Because epoxy-based resin is high-viscosity, the sealing resin 81 to 84 can be cured at one time. That is, first the terminal part 40 is turned upside down and the sealing resin 82 is potted, and then, before the sealing resin 82 is cured, the terminal part 40 is inverted and the sealing resin 81, 83, and 84 is potted. Then, the sealing resin 81 to 84 is cured at the same time. When epoxy-based resin is used, the resin can be cured at one time, and therefore time required for curing can be reduced.

As has been described, in this example, the cables 71 are connected to the resolver terminals 50 via the relay member 60. This example is especially characterized by the method of connecting the cables 71 and the relay terminals 63 of the relay member 60, and the recess 41 of the terminal part 40 in which the relay member 60 is placed and potting is performed. This point will now be described.

In this example, the relay terminals 63 and the tips of the coatings 73 of the cables 71 connected with the relay terminals 63 are separated, and there is a portion with the conductors 72 only between the relay terminals 63 and the tips of the coatings 73. A space filled with sealing resin is allocated below the relay terminals 63 connected with the conductors 72, and the bottom surface corners of the filling space (recess 41) are configured with the curved surfaces 44. Thus, the sealing resin easily flows, that is, the recess 41 is filled with the sealing resin thoroughly, and the conductors 72 between the relay terminals 63 and the tips of the coatings 73 are covered by the sealing resin 81 without fail.

In this example, resin sealing is performed in this way and, for example, if any of the cables 71 is shook and swings up and down, and a crack occurs from an interface between the coating 73 and the sealing resin 81, the progress of the crack is inhibited by the barrier of the sealing resin 81 that adheres to the conductor 72. Therefore, the conductors 72 and the relay terminals 63 connected with the conductors 72 can be protected reliably, and entry of an external contaminant can be prevented. Accordingly, highly reliable resin sealing can be achieved, and highly heat-resistant fluorine resin such as PTFE can be used for the coatings 73. The distance between the relay terminals 63 and the tips of the coatings 73, that is, the length of the conductors 72 in a portion with the conductors 72 only is about 0.1 to 0.5 mm, preferably 0.3 mm.

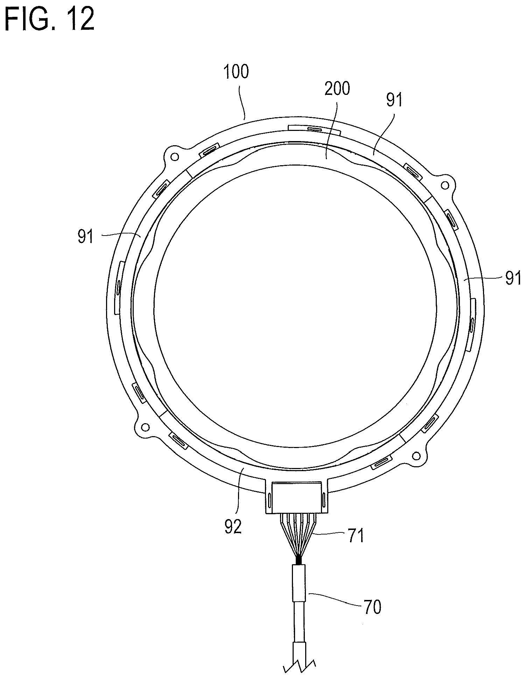

Fig. 12 illustrates a configuration of a resolver in which covers 91 and 92 are attached to the stator 100 illustrated in Fig. 2A and a rotor 200 is incorporated. A rotary shaft to which the rotor 200 is attached is not shown.

## Claims

1. A resolver cable connection structure in which a plurality of cables(71) used for transferring signals are connected with resolver terminals(50),
wherein the plurality of cables(71) are connected with the resolver terminals(50) via a relay member(60), **characterised in that** the relay member(60) includes a holding plate(61) and a plurality of relay terminals(63) that pass through the holding plate(61), are protruded from both plate surfaces of the holding plate(61), and are arranged and held in the holding plate(61),
a conductor(72) of each of the cables(71) is connected to one end side of each of the relay terminals(63),
a recess(41) is formed in a resolver terminal part(40) in which the resolver terminals(50) are arranged, a plurality of notches(43) are provided on a side wall(42) of the recess(41), and bottom surface corners of the recess(41) are configured with curved surfaces(44),
the holding plate(61) is inserted in the recess(41), and one end side of each of the relay terminals(63) and the conductors(72) are positioned in the recess(41) so as to be separated from a bottom surface of the recess(41),
a tip of a coating(73) following the conductor(72) of each of the cables(71) passes through each of the notches(43) and is positioned in the recess(41), and each of the relay terminals(63) and the coating(73) are separated,
the other end side of each of the relay terminals(63) is connected to each of the resolver terminals(50), and
resin is injected into the recess(41), and one end side of each of the relay terminals(63) and the conductors(72) are sealed.

2. The resolver cable connection structure according to claim 1,
wherein positioning protrusions(62) are formed at both ends of the holding plate(61), and
the relay member(60) is positioned by fitting the positioning protrusions(62) in positioning recesses(45) formed in the resolver terminal part(40).

3. The resolver cable connection structure according to claim 1 or 2,
wherein both connection of the conductors(72) and the relay terminals(63) and connection of the resolver terminals(50) and the relay terminals(63) are made by resistance welding.

4. The resolver cable connection structure according to claim 3,
wherein a portion in which the resolver terminals(50) are connected with the relay terminals(63) is positioned in an opening(46) provided in the resolver terminal part(40) so as to open vertically, and
resin is injected into the opening(46), and the other end side of each of the relay terminals(63) and the resolver terminals(50) are sealed.

5. The resolver cable connection structure according to any one of claims 1 to 4,
wherein the upper end side of the holding plate(61) is positioned in the outside of the recess(41) and serves as a handling part(64).

6. A resolver comprising the resolver cable connection structure according to any one of claims 1 to 5.

## Patentansprüche

1. Resolver-Kabelverbindungsstruktur, wobei eine Mehrzahl von Kabeln (71), die zum Übertragen von Signalen verwendet werden, mit Resolver-Klemmen (50) verbunden ist,
wobei die Mehrzahl von Kabeln (71) über ein Relaiselement (60) mit den Resolver-Klemmen (50) verbunden ist,
**dadurch gekennzeichnet, dass**
das Relaiselement (60) eine Halteplatte (61) und eine Mehrzahl von Relaisklemmen (63) umfasst, durch die Halteplatte (61) verläuft, von beiden Plattenoberflächen der Halteplatte (61) vorsteht und in der Halteplatte (61) angeordnet ist und gehalten wird,
einen Leiter (72) jedes der Kabel (71) mit einer Endseite jeder der Relaisklemmen (63) verbunden ist,
eine Ausnehmung (41) in einem Resolver-Klemmenteil (40) gebildet ist, in dem die Resolver-Klemmen (50) angeordnet sind, eine Mehrzahl von Kerben (43) auf einer Seitenwand (42) der Ausnehmung (41) bereitgestellt ist und Bodenflächenecken der Ausnehmung (41) mit gekrümmten Oberflächen (44) konfiguriert sind,
die Halteplatte (61) in die Ausnehmung (41) eingesetzt ist und eine Endseite jeder der Relaisklemmen (63) und die Leiter (72) in der Ausnehmung (41) positioniert sind, um von einer Bodenfläche der Ausnehmung (41) getrennt zu sein,
eine Spitze einer Beschichtung (73), die dem Leiter (72) jedes der Kabel (71) folgt, durch jede der Kerben (43) verläuft und in der Ausnehmung (41) positioniert ist und jede der Relaisklemmen (63) und die Beschichtung (73) getrennt sind,
die andere Endseite jeder der Relaisklemmen (63) mit jeder der Resolver-Klemmen (50) verbunden ist, und
Harz in die Ausnehmung (41) gespritzt wird und eine Endseite jeder der Relaisklemmen (63) und die Leiter (72) versiegelt werden.

2. Resolver-Kabelverbindungsstruktur nach Anspruch 1,
wobei Positionierungsvorsprünge (62) an beiden Enden der Halteplatte (61) gebildet sind, und
das Relaiselement (60) durch Passen der Positionierungsvorsprünge (62) in Positionierungsausnehmungen (45) positioniert wird, die im Resolver-Klemmenteil (40) gebildet sind.

3. Resolver-Kabelverbindungsstruktur nach Anspruch 1 oder 2,
wobei sowohl eine Verbindung der Leiter (72) und der Relaisklemmen (63) als auch eine Verbindung der Resolver-Klemmen (50) und der Relaisklemmen (63) durch Widerstandsschweißen hergestellt ist.

4. Resolver-Kabelverbindungsstruktur nach Anspruch 3,
wobei ein Abschnitt, in dem die Resolver-Klemmen (50) mit den Relaisklemmen (63) verbunden sind, in einer im Resolver-Klemmenteil (40) bereitgestellten Öffnung (46) positioniert ist, um sich vertikal zu öffnen, und
Harz in die Öffnung (46) gespritzt wird und die andere Endseite jeder der Relaisklemmen (63) und der Resolver-Klemmen (50) versiegelt wird.

5. Resolver-Kabelverbindungsstruktur nach einem der Ansprüche 1 bis 4,
wobei die obere Endseite der Halteplatte (61) außerhalb der Ausnehmung (41) positioniert ist und als Bedienungsteil (64) dient.

6. Resolver, der die Resolver-Kabelverbindungsstruktur nach einem der Ansprüche 1 bis 5 umfasst.

## Revendications

1. Structure de connexion de câbles de résolveur dans laquelle une pluralité de câbles (71) utilisés pour le transfert de signaux sont reliés à des bornes de câbles (50),
la pluralité de câbles (71) étant reliée aux bornes de câbles (50) par le biais d'un organe relais (60),
**caractérisée en ce que**
l'organe relais (60) comprend une plaque de maintien (61) et une pluralité de bornes de relais (63) qui passent à travers la plaque de maintien (61), font saillie depuis les deux surfaces de plaque de la plaque de maintien (61), et sont agencées et maintenues dans la plaque de maintien (61),
un conducteur (72) de chacun des câbles (71) est relié à un côté d'extrémité de chacune des bornes de relais (63),
un évidement (41) est formé dans une partie borne de résolveur (40) dans laquelle les bornes de résolveur (50) sont agencées, une pluralité d'encoches (43) sont prévues sur une paroi latérale (42) de l'évidement (41), et des angles de surface de fond de l'évidement (41) sont pourvus de surfaces incurvées (44),
la plaque de maintien (61) est insérée dans l'évidement (41), et un côté d'extrémité de chacune des bornes de relais (63) et les conducteurs (72) sont positionnés dans l'évidement (41) de façon à être séparés d'une surface de fond de l'évidement (41),
une pointe d'un revêtement (73) suivant le conducteur (72) de chacun des câbles (71) passe par chacune des encoches (43) et est positionnée dans l'évidement (41), et chacune des bornes de relais (63) et le revêtement (73) sont séparés,
l'autre côté d'extrémité de chacune des bornes de relais (63) est reliée à chacune des bornes de câbles (50), et
de la résine est injectée dans l'évidement (41), et un côté d'extrémité de chacune des bornes de relais (63) et les conducteurs (72) sont scellés.

2. Structure de connexion de câbles de résolveur selon la revendication 1, dans laquelle des saillies de positionnement (62) sont formées aux deux extrémités de la plaque de maintien (61), et
l'organe relais (60) est positionné en emboîtant les saillies de positionnement (62) dans des évidements de positionnement (45) formés dans la partie borne de résolveur (40).

3. Structure de connexion de câbles de résolveur selon la revendication 1 ou 2, dans laquelle à la fois la connexion des conducteurs (72) et des bornes de relais (63) et la connexion des bornes de câbles (50) et des bornes de relais (63) sont réalisées par soudage par résistance.

4. Structure de connexion de câbles de résolveur selon la revendication 3, dans laquelle une partie dans laquelle les bornes de câbles (50) sont reliées aux bornes de relais (63) est positionnée dans une ouverture (46) ménagée dans la partie borne de résolveur (40) afin de s'ouvrir verticalement, et
de la résine est injectée dans l'ouverture (46), et l'autre côté d'extrémité de chacune des bornes de relais (63) et les bornes de câbles (50) sont soudés.

5. Structure de connexion de câbles de résolveur selon l'une quelconque des revendications 1 à 4,
dans laquelle le côté d'extrémité supérieur de la plaque de maintien (61) est positionné dans l'extérieur de l'évidement (41) et sert de partie de manipulation (64).

6. Résolveur comprenant la structure de connexion de câbles de résolveur selon l'une quelconque des revendications 1 à 5.
